Europäisches Patentamt

European Patent Office

Office européen des brevets

(11) Publication number: **0 504 576 A2**

# EUROPEAN PATENT APPLICATION

(21) Application number: **92102100.2**

(22) Date of filing: **07.02.92**

(51) Int. Cl.5: **G06K 9/20**

(30) Priority: **18.03.91 JP 52832/91**

(43) Date of publication of application:
**23.09.92 Bulletin 92/39**

(84) Designated Contracting States:
**DE FR GB**

(71) Applicant: **EASTMAN KODAK COMPANY**
**343 State Street**
**Rochester, New York 14650-2201(US)**

(72) Inventor: **Izumi, Masaki, c/o EASTMAN KODAK COMPANY**
**Patent Legal Staff, 343 State Street**
**Rochester New York 14650(US)**

(74) Representative: **Wagner, Karl H.**
**WAGNER & GEYER Patentanwälte**
**Gewürzmühlstrasse 5 Postfach 246**
**W-8000 München 22(DE)**

(54) **Document scanner.**

(57) A document scanner is disclosed for handling text for Optical Character Recognition (OCR) processing as well as graphic images. The document scanner includes image scanner means including an optical system, CCD line sensor, amplifier, A/D converter and image processor for scanning and converting images on a document that has a first colored region of images written in ink of a first color, such as black, and a second colored region of images printed in ink of a second color, such as red, that is not the same as the color of the first colored region to image data. A first quantizing means uses a first threshold value to extract image data written in the ink color of the first colored region, and a second quantizing means uses a second threshold value to extract both image data written in the ink color of the first colored region and image data printed in the ink color of the second colored region.

FIG. 1

## Field of the Invention

The present invention relates to a document scanner, and, more particularly, to a document scanner for receiving an input of image data for both optical character recognition (OCR) and image storage applications.

## Background of the Invention

In optical character recognition (OCR) system apparatus, characters have to be read in from a document and converted to image data. Referring now to FIG. 8, there is shown a block diagram of a conventional (prior art) document scanner 10 used for reading characters from a document 11. The document scanner 10 comprises an illuminating system 12 for illuminating the document 11 through a filter 25 formed of a dropout color (e.g., red), an optical system 13 for focussing light reflected from the document 11 onto a CCD line sensor 14, and a serial connection of an amplifier 15, and analog-to-digital (A/D) converter 16, an image processor 17, a binarizer 18 and an OCR circuit 26. A threshold level controller 27 provides a predetermined threshold level to the binarizer 18 for processing an output signal from the CCD line sensor 14.

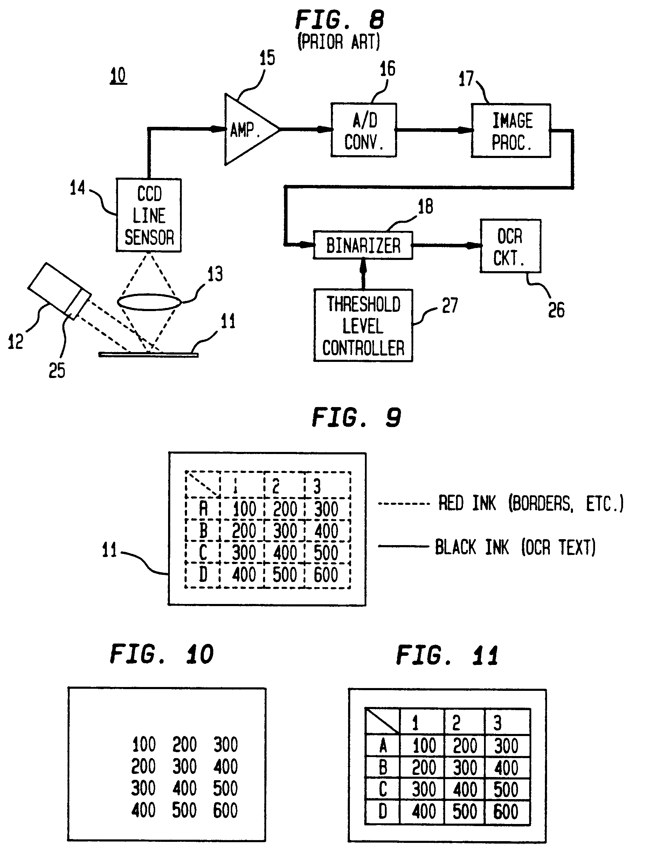

Referring now to FIGs. 9 and 10, in FIG. 9 there is shown details of a typical OCR document 11 for purposes of explanation of the operation of the document scanner 10 of FIG. 8. As shown in FIG. 9, the portion of the document 11 on which OCR is to be performed (indicated by solid lines) is written in, for example, black ink or black pencil, while the background portions relating to the borders and the parts on which OCR will not be performed (indicated by dashed lines) are printed in a dropout color as, for example, red ink or red pencil. FIG. 10 shows an output of the text characters produced by the prior art document scanner 10 of FIG. 8.

In the document scanner 10 of FIG. 8, the illumination system 12 illuminates the OCR document 11 via a red filter 25, as red is the exemplary dropout color. The optical system 13 projects the light reflected by the document 11 onto the CCD line sensor 14 which converts the received light into electrical signals corresponding to the received image patterns. The amplifier 15 amplifies signals from the CCD line sensor 14, and the A/D converter 16 converts the amplified image signals from the amplifier 15 into digital data. The image processor 17, when necessary, performs shading compensation, edge emphasis and so forth on the image data from the A/D converter 16. The binarizer 18 converts the image data that has passed through the image processor 17 into bitonal data, using a threshold value generated by the threshold level controller 27. The OCR circuit 26 performs optical character recognition on the bitonal data from the binarizer 18.

In operation, the document 11 is illuminated by light from the illumination system 12 passing through the red filter 25. Concurrent therewith, the optical system 13 forms an image of the scanned information patterns on the CCD line sensor 14. The CCD line sensor 14 converts the received image into corresponding electrical image signals. As the document 11 is illuminated by red light from the red filter 25, the CCD line sensor 14 only receives images of characters on the document 11 that are written in black ink or pencil. The image signals outputted by the CCD line sensor 14 are amplified by the amplifier 15, and then converted to digital data by the A/D converter 16. The digital data from the A/D converter 16 is then processed, such as shading compensation and edge emphasis, by the image processor 17. The binarizer 18 compares the level of the output image signals from the image processor 17 to a threshold value set by the threshold level controller 27 to thereby produce binarized image data in which a "1" denotes a black ink portion, i.e. a character, and a "0" denotes background. As a result, only the scanned character image data written in black ink on the document 11, as shown in FIG. 10, is inputted to the scanner 10. This image data is then read by the OCR circuit 26.

Thus, with prior art document scanners such as document scanner 10 of FIG. 8, only characters written in a specific ink color, for example black, are converted to the type of OCR-readable form as shown in FIG. 10. Such OCR-readable form is of no concern when the aim is the extraction or character recognition of text. However, what such prior art document scanners cannot do is to scan in everything on the document, meaning background portions such as borders, etc. printed in dropout colors as well as text for OCR applications (hereinafter also referred to as "OCR text") such as shown in the example of FIG. 11. Therefore, in such prior art document scanners, there is no way of scanning in both background and text portions and then extracting just the text. Thus, there is a need for a document scanner that can be used for both purposes. It is thus desirable to provide a document scanner that can separately convert text portions and background images to image data making it possible to perform high-accuracy optical character recognition while at the same time scanning in background image information.

## Summary of the Invention

The present invention is directed to a document scanner comprising image scanning means, first quantizing means, and second quantizing means. The image scanning means is used for scanning and converting images from a document that comprises a first region of images of a first color and a second region of images of a second color that differs from the color of the first region to image output signals. The first quantizing means uses a first threshold value for extracting both image data of the first color from the first region and image data of the second color from the second region from among the image output signals from the image scanning means. The second quantizing means uses a second threshold value for extracting image data of the first color from the first region from among the image output signals from the image scanning means.

In a first embodiment of the above-described document scanner, the first and second quantizing means each comprise a threshold level control means, and binarizing means. The first and second threshold level control means of the first and second quantizing means, respectively, generate respective first and second threshold values. The binarizing means of the first quantizing means binarizes the image data outputted from the image scanning means on the basis of the first threshold value generated by the first threshold level control means of the first quantizing means. The binarizing means of the second quantizing means binarizes the image data output from the image scanning means on the basis of the second threshold value generated by the second threshold level control means of the second quantizing means. It is an aspect of the first embodiment that the document scanner further comprises an image memory means, and an optical character recognition means. The image memory means stores the both image data relating to the images of the first color in the first region and image data relating to images of the second color in the second region outputted by the binarizing means of the second quantizing means. The optical character recognition means performs an optical character recognition process on the image data relating to the images of the first color in the first region outputted by the binarizing means of the second quantizing means.

In a second embodiment of the above-described document scanner, which includes the elements of the first embodiment described hereinabove, the first quantizing means further comprises an isolated point filter, and a set of at least one delay means, and the second quantizing means further comprises a faded character compensation means, and a set of at least one delay means. The isolated point filter of the first quantizing means comprises at least one input, and an output for providing the output of the first quantizing means. The set of at least one delay means of the first quantizing means are connected in series with other delay means of the set. Each of the delay means of the set has a delay corresponding to the time to scan one line of the document, and comprises an input coupled (a) to a prior one-line delay means when said delay means is not a first delay means in the series and (b) to an output from the binarizing means of the first quantizing means when said delay means is a first one of the series, and an output coupled to a separate one of the at least one inputs of the isolated point filter. The faded character compensation means of the second quantizing means comprises at least one input, and an output coupled to an input of the optical character recognition means. The set of at least one delay means of the second quantizing means are connected in series, each of the delay means of the set of delay means having a delay corresponding to the time to scan one line of the document and comprising an input coupled (a) to the a prior delay means when said delay means is not a first delay means in the series and (b) to an output from the second binarizing means of the second quantizing means when said delay means is a first one of the series, and an output coupled to a separate one of the at least one inputs of the faded character compensation means. In accordance with is the second embodiment, the document scanner further comprises an image memory means and an optical character recognition means. The image memory means stores storing the image data relating to the images of the first color in the first region and image data relating to images of the second color in the second region of the first color in the first region outputted by the isolated point filter of the first quantizing means. The optical character recognition means performs an optical character recognition process on the image data relating to the images of the first color in the first region outputted by the faded character compensation means of the second quantizing means.

Thus, in the document scanner of the present invention, the images on a document that have a first colored region of images written in black ink, for example, and a second colored region of images printed in red or other such color that differs from the color of the first colored region are converted to image signals by an image scanning means. From these image signals, a first quantizing means with a first threshold value is used to extract both the image data written in the color of the first colored region and image data printed in the color of the second colored region for transmission to an image memory (file) or the like, while image data written in the color (e.g., black) of the first colored region is extracted by a second quantizing means based on a second threshold value for OCR processing.

The invention and its various advantages will be better understood from the following more detailed description taken with the accompanying drawings and claims.

## Brief Description of the Drawings

FIG. 1 shows a block diagram of a first embodiment of a document scanner in accordance with the present invention;

FIG. 2 shows exemplary curves of the overall spectral sensitivity S of the document scanner, red ink reflectivity R and black ink reflectivity B plotted against the wavelength of the light;

FIG. 3 is an explanatory diagram to illustrate the difference in scanned signal levels between borders printed in red and OCR text;

FIG. 4 shows an explanatory diagram to explain faded text;

FIG. 5 shows an explanatory diagram to explain faded text compensation;

FIG. 6 shows a block diagram of a second embodiment of a document scanner in accordance with the present invention;

FIG. 7 shows a block diagram of an arrangement for performing sensitivity matching in the document scanners of FIGs. 1 and 6;

FIG. 8 shows a schematic diagram of a document scanner in accordance with the prior art;

FIG. 9 shows an explanatory diagram of an exemplary OCR document containing a mixture of black text characters and red borders;

FIG. 10 shows the output of just the text characters of the exemplary OCR document of FIG. 9; and

FIG. 11 is an explanatory illustration showing an output of the black text with the red borders of the exemplary OCR document of FIG. 9.

The drawings are not necessarily to scale.

## Detailed Description

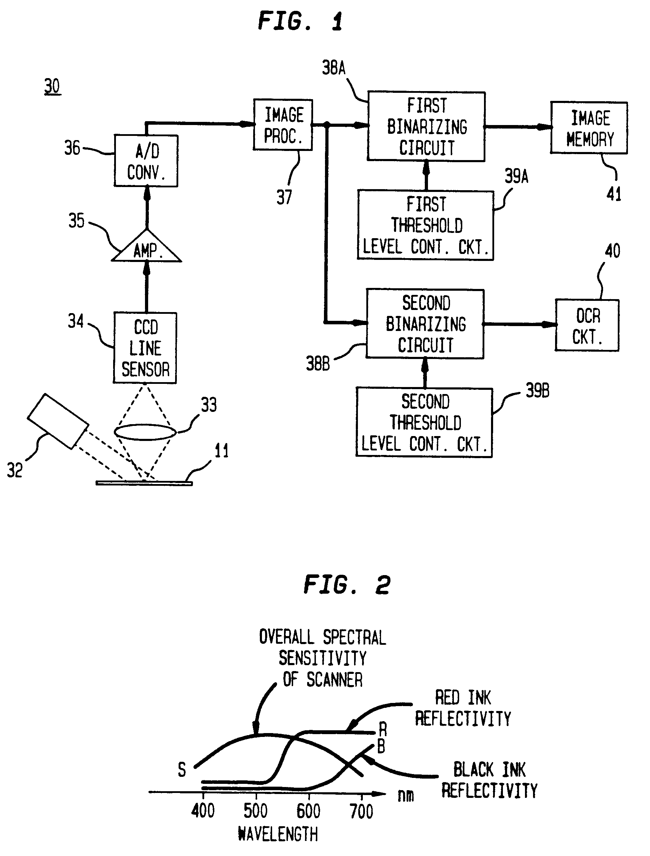

Referring now to FIG. 1, there is shown a block diagram of a a document scanner 30 in accordance with a first embodiment of the present invention. More particularly, image information on a document 11 to be subjected to optical character recognition (OCR) processing (hereinafter also referred to as an "OCR document") is illuminated by an illumination system 32, focussed by an optical system 33 onto a CCD line sensor 34 and scanned by the CCD line sensor 34. The CCD line sensor 34 produces electrical image output signals which are amplified by an amplifier 35, converted to digital form by an A/D converter 36 and then sent to an image processor 37 for shading compensation and edge emphasis. This portion of the document scanner 30 is essentially identical to the prior art document scanner 10 shown in FIG. 8, except that the red filter 25 of FIG. 8 is not interposed between the illumination system 32 and the document 11 as found in the document scanner 10 of FIG. 8. The document scanner 30 of FIG. 1 further comprises a first binarizing circuit 38A, a second binarizing circuit 38B, a first threshold level control circuit 39A, a second threshold level control circuit 39B, an OCR circuit 40, and an image memory 41.

More particularly, the first binarizing circuit 38A binarizes the image data output outputted from the image processor 37 on the basis of a first threshold value (hereinafter also referred to as threshold value A) provided as an output from the first threshold level control circuit 39A. The binarized image data from the first binarizing circuit 38A is provided as an input to the image memory 41. Similarly, the second binarizing circuit 38B binarizes the image data outputted from the image processor 37 on the basis of a second threshold value (hereinafter also referred to as threshold value B) provided as an output from the second threshold level control circuit 39B. The binarized image data from the second binarizing circuit 38B is provided as an input to the OCR circuit 40.

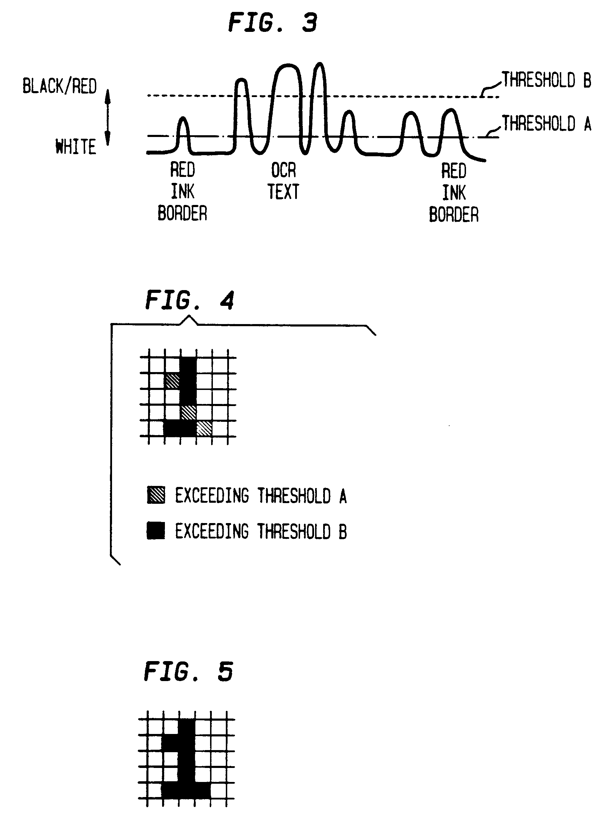

The operation of the document scanner 30 will now be described with reference to FIGs. 2 and 3. FIG. 2 shows exemplary curves of the overall spectral sensitivity S of the document scanner 30, the red ink reflectivity R, and the black ink reflectivity B plotted against the wavelength of the light along the horizontal axis. FIG. 3 shows exemplary waveforms of the difference in scanned signal level between red borders and black OCR text. while it depends on the particular illumination system 32, optical system 33, and CCD line sensor 34 used, the spectral sensitivity "S" of the document scanner 30 usually extends to the red part of the spectrum. when the document scanner 30 scans a document containing a combination of red borders and black characters such as the exemplary document 11 shown in FIG. 9, image data that is outputted by the image processor 37 is similar to the signals shown in the waveforms of FIG. 3. The waveforms shown in FIG. 3 represent the image data output signal of the CCD line sensor 34, and the vertical axis indicates color (i.e., black/red) at the top and white at the bottom. As is shown in FIG. 2, the red ink produces lower reflectivity peaks than the black ink. Therefore, the threshold value A provided by the first threshold level control circuit 39A is used to binarize both black ink and red ink pattern information, while the threshold value B provided by the second threshold level control circuit 39B is used to binarize black ink portions only.

With the configuration of the document scanner 30, the threshold value A is set in the first threshold level control circuit 39A. The output of the first binarizing circuit 38A is based on the threshold value A setting of first threshold level control circuit 39A, and corresponds to the overall image data of the document including both the black ink image data and the red ink image data. Similarly, as the threshold value B is set in the second threshold level control circuit 39B, the output of second binarizing circuit 38B based on the threshold value B setting of second threshold level control circuit 39B will correspond only to black ink image data. Overall image data from the first binarizing circuit 38A is stored in the image memory 41, and OCR image data from the second binarizing circuit 38B is inputted to the OCR circuit 40, thereby enabling the required bitonal image data to be obtained.

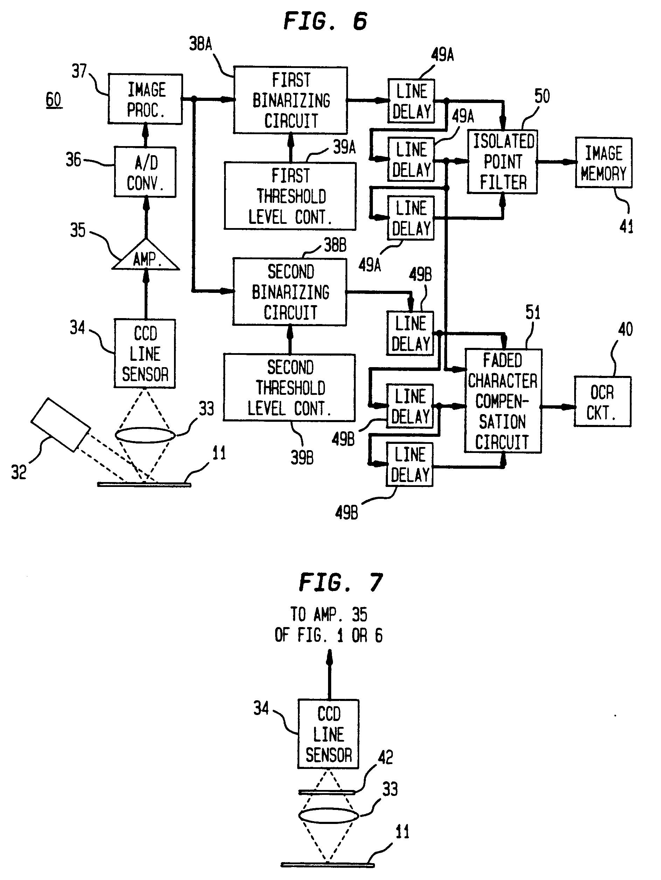

Referring now to FIG. 6, there is shown a block diagram of a document scanner 60 in accordance with a second embodiment of the present invention comprising a faded character compensation circuit 51 and an isolated point filter 50. Document scanner 60 has a number of components which are essentially the same as corresponding components of the document scanner 30 of FIG. 1 and use the same reference number as the corresponding components. The document scanner 60 comprises the illuminating system 32, the optical system 33, the CCD line sensor 34, the amplifier 35, the A/D Converter 36, the image processor 37, the first and second binarizing circuits 38A and 38B associated with the first and second threshold level control circuits 39A and 39B, respectively, the OCR circuit 40, and the image memory 41 shown in FIG. 1. Additionally, in accordance with the second embodiment of the present invention, the document scanner 60 comprises a first set of three serially-connected one-line delay circuits 49A, and a second set of three serially-connected one-line delay circuits 49B. Each of the one-line delay circuits 49A of the first set of one-line delay circuits has its output connected to a separate input of an isolated point filter 50. Similarly, each of the one-line delay circuits 49B of the second set of one-line delay circuits has its output connected to a separate input of the faded character compensation circuit 51. The outputs from the isolated point filter 50 and the faded character compensation circuit 51 are inputted to the image memory 41 and the OCR circuit 40, respectively.

More particularly, the respective outputs of the first binarizing circuit 38A and second binarizing circuit 38B are inputted to the first and the second set of three serially-connected one-line delay circuits 49A and 49B, respectively. Each of the delay lines 49A and 49B corresponding to a delay of one line of scanned image data on the document 11. The output sides of the first set of one-line delay circuits 49A are each connected to a separate input of the isolated point filter 50. The second one of the one-line delay circuit 49A of the first set has its output also connected to an input of the faded character compensation circuit 51. The output sides of the second set of one-line delay circuits 49B are each connected to a separate input of the faded character compensation circuit 51. The isolated point filter 50 and faded character compensation circuit 51 are each provided with a three-pixel shift register (not shown). This enables image data corresponding to the pixels around each pixel of interest to be inputted to the isolated point filter 50 and faded character compensation circuit 51.

The isolated point filter 50 enables the data for the pixels around a pixel of interest to be examined to determine whether or not the pixel of interest should be inverted or not. This results in bitonal image data with a low level of noise. More particularly, it is to be understood that, for example, a speck of dirt on the document 11 can produce a signal that exceeds the threshold value A from the first threshold level control circuit 39A in the same way as genuine image data. Such major noise factors in the processing of an image can be eliminated to some degree by the isolated point filter 50, whereby a single "1" pixel is regarded as a "0" pixel when all the surrounding pixels are "0s" and, conversely, a single "0" pixel is regarded as a "1" when all the surrounding pixels are "1s".

Referring now to FIGs. 4 and 5, FIG. 4 shows an explanatory diagrams to explain faded text, while FIG. 5, shows an explanatory diagram of the faded text of FIG. 4 which has been compensated for faded portions. The faded character compensation circuit 51 examines the pixel data of interest and decides whether or not to change the pixel data from threshold value B data to threshold value A data so as to produce a clear character. More particularly, it is possible that, for example, a black-ink character that has a faded body or edge portions that produce a signal below the threshold value B may not be reproducible in its entirety from the portions above and below the threshold value A. In such cases where there are values of the image data from the image processor 37 between threshold values A and B and, furthermore, the surrounding pixels exceed the threshold value B, the faded character compensation circuit 51 processes the subject pixels as being above the threshold value B. This produces a complete character as shown in FIG. 5.

Referring now to FIG. 7, there is shown a block diagram of the optical arrangement of the document scanner 30 or 60 for performing sensitivity matching in accordance with the present invention. More particularly, when there is no clear separation between the signal peaks shown in FIG. 3 owing to a lack of matching between the sensitivity of the document scanner 30 and the reflectivity of the background or ink, an optional color compensation filter 42 is used between the CCD line sensor 34 and the optical system 33, as shown in FIG. 7, to match the sensitivity.

It is to be appreciated and understood that the specific embodiments of the invention described hereinbefore are merely illustrative of the general principles of the invention. Various modifications may be made by those skilled in the art which are consistent with the principles set forth.

**Claims**

1. A document scanner comprising:

   image scanning means for scanning and converting images on a document that comprises a first region of images of a first color and a second region of images of a second color, which differs from the color of the first region, to image output signals;

   first quantizing means that uses a first threshold value for extracting both image data relating to the images of the first color in the first region and image data relating to the images of the second color in the second region from among the image output signals from the image scanning means; and

   second quantizing means that uses a second threshold value for extracting only image data relating to the images of the first color in the first region from among the image output signals from the image scanning means.

2. The document scanner of claim 1 further comprising:

   image memory means for storing the image data relating to the images of the first color in the first region and image data relating to images of the second color in the second region outputted by the first quantizing means; and

   optical character recognition means for performing an optical character recognition process on the image data relating to the images of the first color in the first region outputted by the second quantizing means.

3. The document scanner of claim 1 wherein:

   the first quantizing means comprises:

   threshold level control means for generating the first threshold value; and

   binarizing means for binarizing the image data output from the image scanning means on the basis of the first threshold value generated by the first threshold level control means; and

   the second quantizing means comprises:

   threshold level control means for generating the second threshold value; and

   binarizing means for binarizing the image data output from the image scanning means on the basis of the second threshold value generated by the threshold level control means.

4. The document scanner of claim 3 further comprising:

   image memory means for storing the image data relating to the images of the first color in the first region and image data relating to images of the second color in the second region outputted by the first quantizing means; and

   optical character recognition means for performing an optical character recognition process on the image data relating to the images of the first color in the first region outputted by the second quantizing means.

5. The document scanner of claim 3 wherein:

   the first quantizing means further comprises:

   an isolated point filter comprising at least one input, and an output for providing the output of the first quantizing means; and

   a set of at least one delay means connected in series with other delay means of the set, each of the delay means of the set having a delay corresponding to the time to scan one line of the document and comprising an input coupled (a) to a prior one-line delay means when said delay means is not a first delay means in the series and (b) to an output from the binarizing means of the first quantizing means when said delay means is a first one of the series, and an output coupled to a separate one of the at least one inputs of the isolated point filter; and

   the second quantizing means further comprises:

   faded character compensation means comprising at least one input, and an output coupled to an input of the optical character recognition means; and

   a set of at least one delay means connected in series, each of the delay means of the set of delay means having a delay corresponding to the time to scan one line of the document and comprising an input coupled (a) to the a prior delay means when said delay means is not a first delay means in the series and (b) to an output from the second binarizing means of the second quantizing means when said delay means is a first one of the series, and an output coupled to a separate one of the at least one inputs of the faded character compensation means.

6. The document scanner of claim 5 further comprising:

image memory means for storing the image data relating to the images of the first color in the first region and image data relating to images of the second color in the second region outputted by the first quantizing means; and

optical character recognition means for performing an optical character recognition process on the image data relating to the images of the first color in the first region outputted by the second quantizing means.

7. The document scanner of claim 1 wherein the image scanning means comprises:

illuminating means for illuminating the document to be scanned;

sensor means for detecting images illuminated by the illuminating means and reflected from the document, and converting the detected images into representative electrical image output signals; and

an optical system for focussing light reflected from the document onto the sensor means.

8. The document scanner of claim 7 further comprising a color compensation filter disposed between the optical system and the sensor means for providing a match between a sensitivity value of the document scanner and a reflectivity of background or ink on the document.

9. A document scanner comprising:

illuminating means for illuminating a document to be scanned;

image scanning means for scanning and converting images on a document that comprises a first region of images of a first color and a second region of images of a second color that differs from the color of the first region to image output signals;

first quantizing means that uses a first threshold value for extracting image data relating to the images of the first color in the first region from among the image output signals from the image scanning means; and

second quantizing means that uses a second threshold value for extracting both image data relating to the images of the first color in the first region and image data relating to the images of the second color in the second region from among the image output signals from the image scanning means.

10. The document scanner of claim 9 further comprising:

image memory means for storing the image data relating to the images of the first color in the first region and image data relating to images of the second color in the second region outputted by the first quantizing means; and

optical character recognition means for performing an optical character recognition process on the image data relating to the images of the first color in the first region outputted by the second quantizing means.

11. The document scanner of claim 9 wherein:

the first quantizing means comprises:

threshold level control means for generating the first threshold value; and

binarizing means for binarizing the image data output from the image scanning means on the basis of the first threshold value generated by the first threshold level control means; and

the second quantizing means comprises:

threshold level control means for generating the second threshold value; and

binarizing means for binarizing the image data output from the image scanning means on the basis of the second threshold value generated by the threshold level control means.

12. The document scanner of claim 11 further comprising:

image memory means for storing the image data relating to the images of the first color in the first region and image data relating to images of the second color in the second region outputted by the first quantizing means; and

optical character recognition means for performing an optical character recognition process on the image data relating to the images of the first color in the first region outputted by the second quantizing means.

13. The document scanner of claim 11 wherein:

the first quantizing means further comprises:

an isolated point filter comprising at least one input, and an output for providing the output of the first quantizing means; and

a set of at least one delay means connected in series with other delay means of the set, each of the delay means of the set having a delay corresponding to the time to scan one line of the document and comprising an input coupled (a) to a prior one-line delay means when said delay means is not a first delay means in the series and (b) to an output from the binarizing means of the first quantizing means when said delay means is a first one of the series, and an output coupled to a separate one of the at least one inputs of the isolated point filter; and

the second quantizing means further comprises:

faded character compensation means comprising at least one input, and an output coupled to an input of the optical character recognition means; and

a set of at least one delay means connected in series, each of the delay means of the set of delay means having a delay corresponding to the time to scan one line of the document and comprising an input coupled (a) to the a prior delay means when said delay means is not a first delay means in the series and (b) to an output from the second binarizing means of the second quantizing means when said delay means is a first one of the series, and an output coupled to a separate one of the at least one inputs of the faded character compensation means.

14. The document scanner of claim 13 further comprising:

image memory means for storing the image data relating to the images of the first color in the first region and image data relating to images of the second color in the second region outputted by the first quantizing means; and

optical character recognition means for performing an optical character recognition process on the image data relating to the images of the first color in the first region outputted by the second quantizing means.

15. The document scanner of claim 9 wherein the image scanning means comprises:

sensor means for detecting images illuminated by the illuminating means and reflected from the document, and converting the detected images into representative electrical image output signals; and

an optical system for focussing light reflected from the document onto the sensor means.

16. The document scanner of claim 15 further comprising a color compensation filter disposed between the optical system and the sensor means for providing a match between a sensitivity value of the document scanner and a reflectivity of background or ink on the document.

# FIG. 1

# FIG. 2

# FIG. 3

BLACK/RED

THRESHOLD B

THRESHOLD A

WHITE

RED
INK
BORDER

OCR
TEXT

RED
INK
BORDER

# FIG. 4

▨ EXCEEDING THRESHOLD A

■ EXCEEDING THRESHOLD B

# FIG. 5

## FIG. 6

## FIG. 7

TO AMP. 35
OF FIG. 1 OR 6

11

## FIG. 8
### (PRIOR ART)

## FIG. 9

------ RED INK (BORDERS, ETC.)

——— BLACK INK (OCR TEXT)

## FIG. 10

## FIG. 11

| | 1 | 2 | 3 |
|---|---|---|---|
| A | 100 | 200 | 300 |
| B | 200 | 300 | 400 |
| C | 300 | 400 | 500 |
| D | 400 | 500 | 600 |